# EUROPEAN PATENT SPECIFICATION

(11) **EP 2 975 758 B1**
(45) Date of publication and mention of the grant of the patent: **04.12.2019**
(21) Application number: 14765009.7
(22) Date of filing: 26.01.2014
(51) Int. Cl.: H02N 1/04

(54) **SLIDING FRICTIONAL NANO GENERATOR AND POWER GENERATION METHOD**
GLEITENDER REIBUNGSNANOGENERATOR UND STROMERZEUGUNGSVERFAHREN
NANOGÉNÉRATEUR FRICTIONNEL GLISSANT ET PROCÉDÉ DE GÉNÉRATION DE PUISSANCE

(30) Priority: 12.03.2013 CN 201310077885
(43) Date of publication of application: 20.01.2016
(73) Proprietor: Beijing Institute of Nanoenergy and Nanosystems, Beijing 100083 (CN)
(72) Inventor: WANG, Zhonglin, Beijing 100190 (CN); ZHU, Guang, Beijing 100190 (CN); WANG, Sihong, Beijing 100190 (CN); LIN, Long, Beijing 100190 (CN); CHEN, Jun, Beijing 100190 (CN)
(74) Representative: Carpmaels & Ransford LLP
(86) International application number: PCT/CN2014/071474
(87) International publication number: WO 2014/139347

(56) References cited:
- CN-A- 102 246 407
- CN-A- 102 342 011
- CN-A- 102 474 203
- CN-A- 102 684 546
- CN-A- 103 368 447
- DE-A1- 4 429 029
- US-A1- 2013 049 531
- FENG-RU FAN ET AL: "Flexible triboelectric generator", NANO ENERGY, vol. 1, no. 2, 20 January 2012 (2012-01-20), pages 328-334, XP055048851, ISSN: 2211-2855, DOI: 10.1016/j.nanoen.2012.01.004

## Description

### TECHNICAL FIELD

This invention relates to a power generator and a power generation method, particularly to a triboelectric nanogenerator in which the mechanical energy of an applied external force is converted to electrical energy, as well as a power generation method using this nanogenerator.

### BACKGROUND ART

In modern days when micro-electronics and material technologies are in high-speed development, a large number of novel micro-electronic devices, which have a plurality of functions and are highly integrated, are being continuously developed, and exhibit an unprecedentedly prospect for application in various fields of daily life of human beings. However, the studies on the power supply systems used for these micro-electronic devices relatively fall behind. Generally, the power supplies of these micro-electronic devices are all from batteries directly or indirectly. Batteries do not only have larger volume and heavier weight, but also contain toxic chemicals, which are potentially harmful to the environment and human bodies. Therefore, there is an extremely important sense to develop a technology in which the naturally occurring mechanical energies such as movement and vibration are converted to electrical energy.

However, at present, the power generators capable of effectively converting the mechanical energy described above to electrical energy are all based on electromagnetic induction, in which a water turbine, a steam turbine, a diesel engine or other dynamical mechanism drives the energy generated from water flow, air flow, fuel combustion or nuclear fission to be converted to mechanical energy and conveyed to a power generator, and the mechanical energy is converted to electrical energy for use by the power generator. All of these power generators require relatively concentrated and high-intensity energy input, while the low-intensity kinetic energies generated in daily activities of human beings and occurring in nature substantially fail to be effectively converted to electrical energy. Meanwhile, the conventional power generators have larger volumes and complex structures, and cannot be used as the power supply elements of micro-electronic devices at all.

DE 4429029A1 discloses a frictional generator, comprising a flat conductor (25, 45) and a flat insulator (27, 47). In mutual contact, the conductor and insulator move relative to one another, generating static electricity by friction.

US 2013/049531 A1 discloses a generator, comprising a thin first contact charging layer and a thin second contact charging layer. The thin first contact charging layer includes a first material that has a first rating on a triboelectric series. The thin first contact charging layer has a first side with a first conductive electrode applied thereto and an opposite second side. The thin second contact charging layer includes a second material that has a second rating on a triboelectric series that is more negative than the first rating.

Fan et. al. discloses a triboelectric generator which is formed by stacking two polymer sheets made of materials having distinctly different triboelectric characteristics, with metal films deposited on the top and bottom of the assembled structure (see, Feng-Ru Fan, ET AL: "Flexible Triboelectric Generator", NANO ENERGY, Vol. 1, No. 2, Pages 328-334, January 2012). Once subjected to mechanical deformation, a friction between the two films, owing to the nano-scale roughness, generates equal amounts but opposite signs of charges at the two sides.

### SUMMARY OF THE INVENTION

In order to overcome the above problems in the prior art, this present invention provides a sliding triboelectric nanogenerator capable of converting the mechanical energy of a tangential external force applied to the triboelectric nanogenerator to electrical energy.

In order to achieve the object described above, this present invention provides a triboelectric nanogenerator, comprising:
a friction layer,
a conductive element disposed in contact with the lower part of the friction layer, and
a conductive layer;
wherein the upper surface of the friction layer is disposed oppositely to the lower surface of the conductive layer; and
the upper surface of the friction layer and the lower surface of the conductive layer perform relative sliding under the action of an external force and generate sliding friction tangent to the contact face while the friction area varies in the process of sliding, and an electrical signal is output to an external circuit by the conductive element and the conductive layer.

Preferably, there is a difference in friction electrode sequence between the material of the upper surface of the friction layer and the material of the lower surface of the conductive layer.

Preferably, the upper surface of the friction layer is disposed in contact with the lower surface of the conductive layer.

Preferably, without the action of the external force, the upper surface of the friction layer is separated from the lower surface of the conductive layer, and under the action of the external force, the upper surface of the friction layer is in contact with the lower surface of the conductive layer and relative sliding friction tangent to the contact face occurs.

Preferably, the friction layer is an insulating material or a semiconductor material.

Preferably, the insulating material is selected from polytetrafluoroethylene, polydimethylsiloxane, polyimide, polydiphenyl propane carbonate, polyethylene terephthalate, aniline-formaldehyde resin, polyformaldehyde, ethyl cellulose, polyamide, melamine formaldehyde, polyethylene glycol succinate, cellulose, cellulose acetate, polyethylene glycol adipate, polydiallyl phthalate, a regenerated fiber sponge, a polyurethane elastomer, a styrene-propylene copolymer, a styrene-butadiene copolymer, an artificial fiber, a polymethacrylate, a polyvinyl alcohol, a polyester, a polyisobutylene, a polyurethane flexible sponge, polyethylene terephthalate, polyvinyl butyral, phenol formaldehyde resin, chloroprene rubber, a butadiene-propylene copolymer, a natural rubber, polyacrylonitrile, poly(vinylidene chloride-co-acrylonitrile), polyethylene bisphenol A carbonate, polystyrene, polymethyl methacrylate, polycarbonate, a liquid crystal high-molecular polymer, polychlorobutadiene, polyacrylonitrile, polybisphenol carbonate, polychloro ether, polytrifluorochloroethylene, polyvinylidene chloride, polyethylene, polypropylene, polyvinyl chloride and parylenes.

Preferably, the insulating material is selected from polystyrene, polyethylene, polypropylene, polydiphenyl propane carbonate, polyethylene terephthalate, polyimide, polyvinyl chloride, polydimethylsiloxane, polytrifluorochloroethylene, polytetrafluoroethylene and parylenes.

Preferably, the semiconductor material is selected from silicon, germanium, a Group III-Group V compound, a Group II-Group VI compound, a solid solution composed of a Group III-Group V compound and a Group II-Group VI compound, an amorphous glass semiconductor and an organic semiconductor.

Preferably, the Group III-Group V compound is selected from gallium arsenide and gallium phosphide; the Group II-Group VI compound is selected from cadmium sulfide and zinc sulfide; the oxide is selected from the oxides of manganese, chromium, iron or copper; the solid solution composed of a Group III -V compound and a Group II-Group VI compound is selected from gallium aluminum arsenide and gallium arsenic phosphide.

Preferably, the friction layer is a non-conductive oxide, a semiconductor oxide or a complex oxide, including silicon oxide, aluminum oxide, manganese oxide, chromium oxide, ferric oxide, titanium oxide, copper oxide, zinc oxide, BiO₂ and Y₂O₃.

Preferably, microstructures on the order of micrometer or sub-micrometer are distributed on the upper surface of the friction layer and/or the lower surface of the conductive layer.

Preferably, the microstructures are selected from the structures of nanowires, nanotubes, nanoparticles, nanogrooves, microgrooves, nanocones, microcones, nanospheres and microspheres.

Preferably, the upper surface of the friction layer and/or the lower surface of the conductive layer are provided with an ornament or a coating of a nanomaterial.

Preferably, the upper surface of the friction layer and/or the lower surface of the conductive layer have been subjected to chemical modification such that a functional group prone to gain an electron is introduced to the material of the upper surface of the friction layer and/or a functional group prone to lose an electron is introduced to the material of the lower surface of the conductive layer.

Preferably, the functional group prone to lose an electron comprises an amino group, a hydroxy group or an alkoxy group.

Preferably, the functional group prone to gain an electron comprises an acyl group, a carboxyl group, a nitro group or a sulfonic acid group.

Preferably, the upper surface of the friction layer and/or the lower surface of the conductive layer have been subjected to chemical modification such that negative charges are introduced into the material of the upper surface of the friction layer and/or positive charges are introduced into the material of the lower surface of the conductive layer.

Preferably, the chemical modification is achieved in a manner of introducing a charged group by chemical bonding.

Preferably, the conductive layer is a conductive material, and the conductive material is selected from a metal and a conductive oxide.

Preferably, the metal is selected from gold, silver, platinum, aluminum, nickel, copper, titanium, chromium or selenium, and an alloy formed of the above metals.

Preferably, the conductive element is selected from a metal and a conductive oxide.

Preferably, the conductive element is selected from gold, silver, platinum, aluminum, nickel, copper, titanium, chromium or selenium, and an alloy formed of the above metals.

Preferably, the conductive element, the friction layer and/or the conductive layer is/are in a form of a thin film.

Preferably, the friction layer, the conductive layer and/or the conductive element is/are hard.

Preferably, the friction layer, the conductive layer and/or the conductive element is/are flexible.

Preferably, the conductive element is fixed on the lower surface of the friction layer.

Preferably, the conductive element is produced on the lower surface of the friction layer by deposition.

Preferably, the conductive element and the friction layer are the same in size and shape.

Preferably, the conductive element, the friction layer and the conductive layer are all planar structures.

Preferably, the conductive element and the friction layer are curved structures and/or the conductive layer is a curved structure.

This present invention further provides a power generation method using any one of the nanogenerators disclosed in the present invention, comprising the steps of:
(1) providing the friction layer,
(2) forming the conductive element disposed in contact with the lower part of the friction layer,
(3) providing the conductive layer,
(4) bringing the upper surface of the friction layer into contact with the lower surface of the conductive layer,
(5) electrically connecting the conductive element and the conductive layer to an external circuit;
(6) applying an external force to perform relative sliding between the friction layer and the conductive layer and to generate relative sliding friction tangent to the contact face, wherein by controlling the distance of relative sliding in the process of sliding, the friction layer and the conductive layer are subjected to dislocation in the direction along the contact face and the area of sliding friction varies; and
(7) outputting an electrical signal to the external circuit by the conductive element and the conductive layer.

Preferably, in step (4), the upper surface of the friction layer and the lower surface of the conductive layer are contacted completely.

Preferably, in step (6), the force applied is a sustained external force whose direction is periodically inversed or whose magnitude is periodically changed.

When a periodic tangential external force is applied to the sliding triboelectric nanogenerator of this invention, an alternating pulse signal output may be formed between the conductive element and the conductive layer. Compared to the prior art, the sliding triboelectric nanogenerator and the method of power generation using this nanogenerator of this invention have the following advantages:
1. New breakthrough in principles and applications. The nanogenerator of this invention does not need any gap between two friction layers in process of operation, and is different in the principle from a device in which two friction layers are periodically in complete contact and in complete separation, which provides a completely new design idea to the society. Additionally, the gapless design omits the installation of an elastic distance maintaining piece, provides convenience for the packaging technology, and is allowed to be used in wider fields.
2. Efficient utilization of energy. The nanogenerator of this invention does not require large-scale and high-intensity energy input, as long as the input mechanical energy is capable of driving the relative sliding between the friction layer and the conductive layer. Therefore, the mechanical energies with various intensities generated in nature and daily life of human beings may be effectively collected and are converted to electrical energy, achieving efficient utilization of energy.
3. Simple structure, good portability and high compatibility. The nanogenerator of this invention does not require members such as magnets, coils, rotors, etc., has simple structure, small volume, convenient production, and low cost, may be mounted on various devices which allow relative sliding to be generated between the friction layer and the conductive layer, and does not require any special working environment, and thus has very high compatibility. Meanwhile, the nanogenerator of this invention combines the friction layer and the conductive layer which are prone to lose electrons. The requirements for the operation of the nanogenerator can be satisfied, while the structure is simplified, the cost is saved, and it is very favorable to popularization in practical production.
4. Wide applications. By subjecting the upper surface of the friction layer and the lower surface of the conductive layer in the nanogenerator to physical modification or chemical modification, introducing nanostructure patterns or coating nanomaterials or the like, the contact charge density generated when the contact and relative sliding occur between the two friction layers under the action of the tangential external force in the triboelectric nanogenerator may be further improved, thereby improving the output capacity of the nanogenerator. Therefore, the nanogenerator of this invention may be not only used as a small power source, but also may be used for high power generation.

### BRIEF DESCRIPTION OF THE DRAWINGS

By illustration of the figures, the above and other objects, features and advantages of this invention will be clearer. Throughout all figures, the same reference numerals denote the same parts. The figures are not deliberately depicted by equal-proportion scaling according to the practical size, and the key point is to illustrate the gist of this invention.
Fig. 1 is a typical structural schematic diagram of the triboelectric nanogenerator of this present invention;
Fig. 2 is a sectional schematic diagram of the power generation principle of the triboelectric nanogenerator of this present invention;
Fig. 3 is another typical structural schematic diagram of the triboelectric nanogenerator of this present invention;
Fig. 4 is another typical structural schematic diagram of the triboelectric nanogenerator of this present invention;
Fig. 5 is a short circuit current output graph of the triboelectric nanogenerator in an embodiment of this invention at a relative average sliding rate of 0.6 m/s;
Fig. 6 is a current output graph of the triboelectric nanogenerator in an embodiment of this invention which passes through a full-bridge rectifier at a relative average sliding rate of 0.6 m/s.

### BEST MODES FOR CARRYING OUT THE INVENTION

The technical solutions in the embodiments of this invention will be described clearly and fully below in conjunction with the accompanying drawings in embodiments of this invention. Obviously, the embodiments described are merely part of the embodiments of this invention, rather than all of the embodiments. Based on the embodiments in this invention, all other embodiments obtained by those of ordinary skill in the art without performing inventive work belong to the scope protected by this invention.

Next, this present invention is described in detail in conjunction with schematic diagrams. When the embodiments of this invention are described in detail, for convenience of illustration, the schematic diagrams are merely exemplary and should not limit the scope of this present invention herein.

This present invention provides a simple-structured triboelectric nanogenerator in which the naturally occurring mechanical energies such as movement and vibration or the like are converted to electrical energy, capable of providing the matched power supplies for micro-electronic devices. The triboelectric nanogenerator of this invention converts mechanical energy of an external force to electrical energy by using the phenomenon that surface charge transfer occurs when the materials having difference in polarity of friction electrode sequence are in contact.

The "friction electrode sequence" in the present invention refers to the sequence obtained according to the attracting degree of materials for charges. At the instant when two materials are in friction, negative charges on the friction face transfer from the surface of a material having relatively positive polarity in the friction electrode sequence to the surface of a material having a relatively negative polarity in the friction electrode sequence. Heretofore, there is no uniform theory capable of completely explaining the mechanism of charge transfer. It is generally considered that such charge transfer is related to the surface work function of a material, and the charge transfer is achieved by the transfer of electrons or ions on the contact face. It is to be indicated that the friction electrode sequence is merely a statistical result based on experience. That is, as the difference between two materials in the sequence is larger, the possibility that the positive or negative polarity of charges generated after contact complies with this sequence is greater. Also, the practical results are affected by a plurality of factors, such as surface roughness of materials, environmental humidity, whether relative friction exists, and the like. It is to be further indicated that relative friction between two materials are not required for charge transfer, as long as contact with each other exists.

The "contact charge" in the present invention refers to the charges carried on the surfaces after two materials having difference in polarity of friction electrode sequence are in contact friction and then separated. It is generally considered that the charges are only distributed on the surface of the material, and the maximal depth of distribution is merely about 10 nanometers. It is to be indicated that the symbol of the contact charge is that of the net charge. That is, although a concentration area of negative charges may exist at local areas on the surface of the material having a positive contact charge, the symbol of the net charge on the whole surface is positive.

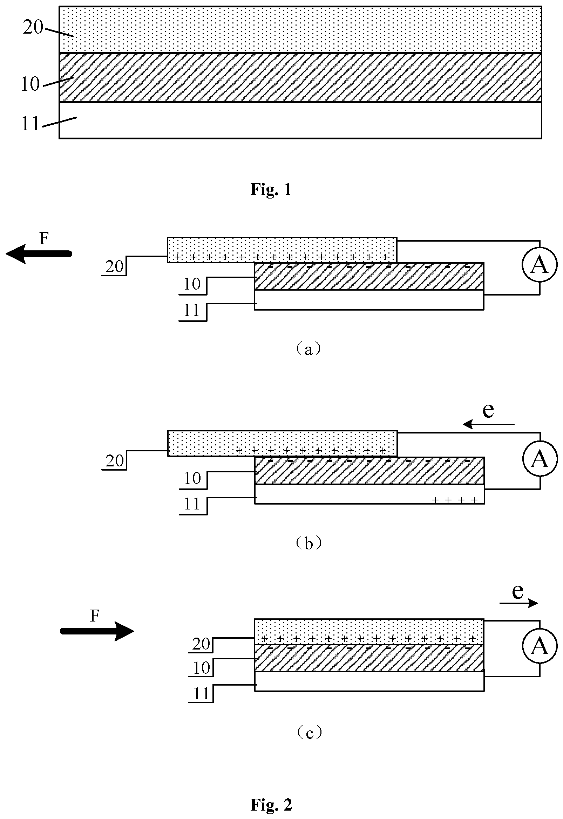

Fig. 1 is a typical structure of the triboelectric nanogenerator of this present invention. It comprises a friction layer 10, a conductive element 11 disposed in contact with the lower surface of the friction layer 10, and a conductive layer 20; the upper surface of the friction layer 10 is in contact with the lower surface of the conductive layer 20; and relative sliding may occur on the contact interface between the friction layer 10 and the conductive layer 20 under the action of an external force, while the contact area changes, and therefore an electrical signal is output to an external circuit by the conductive element 11 and the conductive layer 20.

For convenience of illustration, the principle of this invention, the fundamental for selection of various members, and the range of materials, will be described below in conjunction with the typical structure of Fig. 1. However, it is obvious that these contents are not merely limited to the embodiment shown in Fig. 1, but can be used for all technical solutions disclosed in this present invention.

The working principle and the power generation method of the triboelectric nanogenerator of this present invention are illustrated in conjunction with Fig. 2. When an external force is applied to allow for relative sliding friction between the upper surface of the friction layer 10 and the lower surface of the conductive layer 20, since there is a difference in friction electrode sequence between the material of the upper surface of the friction layer 10 and the material of the lower surface of the conductive layer 20, resulting in that electrons are directly transferred from the contact face of the conductive layer 20 to the upper surface of the friction layer 10 and are possessed by the surface of the friction layer 10 (see Fig. 2 (a)). In order to shield the electric field formed of surface charges remained in the friction layer 10 and the conductive layer 20 due to dislocation, the free electrons in the conductive element 11 will flow onto the conductive layer 20 through an external circuit, thereby generating an external current (see Fig. 2 (b)). When an external force is applied in an opposite direction, relative sliding dislocation of the friction layer 10 or the conductive layer 20 disappears, the two conductive elements return to the original state, and electrons in the conductive layer 20 flow back to the conductive element 10, thereby providing an external current in an opposite direction. By repeating in such a way, an alternating pulse current is formed.

The phenomenon of electrification by friction has already been known, the types of materials on which electrification by friction may occur in the art are also commonly known, and it is generally known that static electricity may generate by friction, but it is proposed by this present invention for the first time with respect to power generation by sliding friction and its application in devices. By the working principle provided above in this present invention, the person skilled in the art may recognize the working mode of the sliding triboelectric nanogenerator so as to be capable of understanding the fundamental for selection of materials for various members. Selectable ranges of the materials of the members suitable for all technical solutions in the present invention are set forth below, and particular selections may be made according to practical needs upon practical application, thereby achieving the object for regulating the output property of the nanogenerator.

In this embodiment, the friction layer 10 is disposed in contact with the conductive layer 20, and both of them are always kept in face contact, in spite of an external force applied thereto. This is the most typical structure of the nanogenerator of this present invention. The change of the friction area in the process of relative sliding friction is easily achieved by controlling the size and the relative displacement amount of the friction layer 10 and the conductive layer 20.

However, it is not limited in this present invention that the friction layer 10 and the conductive layer 20 are kept in face contact throughout, as long as both of them may be in contact and relative sliding friction tangent to the contact face occurs, while friction layer 10 and conductive layer 20 may be completely separated without the action of external force. This design may satisfy the requirement for the case of intermittent power generation. Furthermore, the friction process may comprise both contact friction and sliding friction. There are a lot of technical manners to achieve this object, and a conventional member for controlling distance in the art may be employed. For example, an insulating spring is respectively connected to the lower surface of the friction layer 10 and the upper surface of the conductive layer 20. However, it is to be noted that the spring used should not limit the relative sliding between the friction layer 10 and the conductive layer 20. Furthermore, this embodiment is relatively advantageous to nanogenerators used in combination with other products. The friction layer 10 and the conductive layer 20 may be respectively connected to 2 members separated from each other in another product, and the nanogenerator is brought to work using intermittent contact and relative sliding between the 2 members so as to achieve intermittent power generation.

The upper surface of the friction layer 10 is composed of an insulating material, while the lower surface of the conductive layer 20 is composed of a conductive material, and they have different frictional electrical characteristics. That is, they are in different positions in the friction electrode sequence so that contact charges may be generated on the surface in the process of friction which occurs between the upper surface of the friction layer 10 and the lower surface of the conductive layer 20. All conventional insulating materials have frictional electrical characteristics and may generate negative surface charges on the surface after friction with a conductor, and they may be used as materials for preparing the upper surface of the friction layer 10 of this present invention. A few commonly-used materials are exemplified herein: polytetrafluoroethylene, polydimethylsiloxane, polyimide, polydiphenyl propane carbonate, polyethylene terephthalate, aniline-formaldehyde resin, polyformaldehyde, ethyl cellulose, polyamide, melamine formaldehyde, polyethylene glycol succinate, cellulose, cellulose acetate, polyethylene glycol adipate, polydiallyl phthalate, a regenerated fiber sponge, a polyurethane elastomer, a styrene-propylene copolymer, a styrene-butadiene copolymer, an artificial fiber, a polymethacrylates, a polyvinyl alcohol, a polyester, a polyisobutylene, a polyurethane flexible sponge, polyethylene terephthalate, polyvinyl butyral, phenol formaldehyde resin, chloroprene rubber, a butadiene-propylene copolymer, a natural rubber, polyacrylonitrile, poly(vinylidene chloride-co-acrylonitrile) or polyethylene bisphenol A carbonate, polystyrene, polymethyl methacrylate, polycarbonate or a liquid crystal high-molecular polymer, polychlorobutadiene, polyacrylonitrile, polybisphenol carbonate, polychloro ether, polyvinylidene chloride, polyethylene, polypropylene, polytrifluorochloroethylene, polyvinyl chloride, parylenes (including parylene C, parylene N, parylene D, parylene HT or parylene AF4). For the reason of space limit, it is not possible to exhaustively exemplify all possible materials, and only several specific materials are listed herein for reference. However, it is obvious that these specific materials will not become restrictive factors of the scope of this present invention, since the person skilled in the art will easily select other similar materials according to the frictional electrical characteristics possessed by these materials under the inspiration of this invention.

Semiconductor materials also have frictional electrical characteristics and often lie between insulators and conductors in the list of friction electrode sequence, and may generate negative contact charges on the surface after friction with conductor materials. Therefore, semiconductors may also be used as raw materials for preparing the friction layer 10. Commonly-used semiconductors include silicon, germanium; a Group III-Group V compound, for example gallium arsenide, gallium phosphide, etc.; a Group II-Group VI compound, for example cadmium sulfide, zinc sulfide, etc.; and a solid solution composed of a Group III-Group V compound and a Group II-Group VI compound, for example gallium aluminum arsenide, gallium arsenic phosphide, etc. In addition to the crystalline semiconductors described above, amorphous glass semiconductors, organic semiconductors, etc., are also included. Non-conductive oxides, semiconductor oxides or complex oxides also have frictional electrical characteristics and may form surface charges in the process of friction, and thus may also be used as the friction layer of this invention, for example oxides of manganese, chromium, iron, copper, also including silicon oxide, manganese oxide, chromium oxide, ferric oxide, copper oxide, zinc oxide, BiO₂ and Y₂O₃.

The conductive layer 20 in the nanogenerator does not only provide the lower surface for power generation by friction, but also functions as an electrode. It is required that electrons can be transported through an external circuit when the electric field composed of surface charges are unbalanced. Therefore, the conductive layer 20 is required to be composed of a conductive material, and any normal metal may be selected. Commonly-used metals include gold, silver, platinum, aluminum, nickel, copper, titanium, chromium or selenium, and an alloy formed of the above metals. Of course, other materials having conductive characteristics may also be used as a friction layer prone to lose electrons, for example indium tin oxide ITO and doped semiconductors.

It is experimentally found that as the difference in electron-gaining capacity between the materials of the friction layer 10 and the conductive layer 20 is larger (i.e., the difference between the positions in the sequence is larger), the electrical signal output by the nanogenerator is stronger. Therefore, suitable materials may be selected according to practical needs to prepare the friction layer 10 and the conductive layer 20 so as to obtain a better output effect. Materials having negative polarity of friction electrode sequence are preferably polystyrene, polyethylene, polypropylene, polydiphenyl propane carbonate, polyethylene terephthalate, polyimide, polyvinyl chloride, polydimethylsiloxane, polytrifluorochloroethylene and polytetrafluoroethylene and parylenes including parylene C, parylene N, parylene D, parylene HT or parylene AF4. Materials having positive polarity of friction electrode sequence are preferably copper, aluminum, gold, silver and steel.

Physical modification may be performed on the upper surface of the friction layer 10 and/or the lower surface of the conductive layer 20, which allows microstructure arrays on the order of micrometers or sub-micrometer to be distributed on its surface, so as to increase the contact area between the friction layer 10 and the conductive layer 20 and thereby increasing the quantity of contact charges. Specific methods for modification include photoetching, chemical etching, plasma etching, etc.

Chemical modification may also be performed on the surfaces of the friction layer 10 and/or the conductive layer 20 which are in contact with each other, so that the transfer quantity of charges at the instant of contact may be further increased, thereby increasing the contact charge density and the output power of the nanogenerator. Chemical modifications are further divided into the following two types.

According to one method, with respect to materials of the friction layer 10 and the conductive layer 20 which are in contact with each other, a functional group which is more prone to lose electrons (i.e., a strong electron-donating group) is introduced to the surface of a material having a positive polarity, or a functional group which is more prone to gain electrons (i.e., a strong electron-withdrawing group) is introduced to the surface of a material having a negative polarity, either of which may further increase the transfer quantity of charges upon mutual sliding, thereby increasing the friction charge density and the output power of the nanogenerator. The strong electron-donating groups include: an amino group, a hydroxy group, an alkoxy group, etc.; and the strong electron-withdrawing groups include: an acyl group, a carboxyl group, a nitro group, a sulfonic acid group, etc. Conventional methods, such as plasma surface modification, etc., may be used for the introduction of functional groups. For example, a mixed gas of oxygen and nitrogen may be allowed to generate plasma under a certain power so as to introduce an amino group to the surface of the material of the friction layer.

Another method comprises introducing positive charges to the surface of the material of the friction layer having positive polarity and introducing negative charges to the surface of the material of the friction layer having a negative polarity. Specifically, it may be achieved by means of chemical bonding. For example, the surface of a PDMS friction layer may be modified with ethyl orthosilicate (simply referred to as TEOS) using a hydrolysis-condensation (simply referred to as sol-gel) method to be negatively charged. A metal gold thin film layer may also be modified with gold nanoparticles containing cetyltrimethylammonium bromide on the surface using a gold-sulfur bond structure. Since cetyltrimethylammonium bromide is a cation, the whole friction layer will become positively charged. The person skilled in the art may select the suitable modifying materials to be bonded to the material of the friction layer according to electron-gaining and electron-losing properties and the type of the chemical bond on the surface of the material of the friction layer to achieve the object of this present invention, and therefore such variations are all within the scope of this invention.

This present invention does not define that the friction layer 10 and the conductive layer 20 must be hard materials, and flexible materials may be selected. Since the hardness of the material does not affect the effect of sliding friction between both of them, selection may be made by the person skilled in the art according to practical situations. The thicknesses of the first friction layer 10 and the conductive layer 20 do not significantly affect the implementation of this invention. It is preferable in this present invention that both of them are thin films having a thickness of 50nm-5mm, preferably 100nm-2mm, more preferably 1 µm-800 µm. These thicknesses are suitable for all technical solutions in the present invention.

The conductive element 11 is used as the electrode of the nanogenerator, as long as it has the characteristic of the conducting capacity. It may be selected from metals, indium tin oxide or doped semiconductors, may be a plate, a sheet or a thin film, and has a thickness in an optional range of 10nm-5mm, preferably 50nm-1mm, preferably 100nm-500 µm. Commonly-used metals include gold, silver, platinum, aluminum, nickel, copper, titanium, chromium or selenium, and alloys formed of the above metals, preferably a metal thin film, for example an aluminum film, a gold film, a copper film. The electrode layer is preferred to be in close contact with the surface of the friction layer to ensure transport efficiency of charges. A better manner is to form a film on the surface of the friction layer using a conductive material in a manner of deposition; and a specific deposition method may be electron beam evaporation, plasma sputtering, magnetron sputtering or vapor deposition.

The manner in which the conductive element 11 and the conductive layer 20 are connected to an external circuit may be connection to an external circuit by a conductive wire or a metal thin film.

In order to ensure the mechanical strength of this nanogenerator, a support layer, preferably an insulating material or a semiconductor material, for example a plastic plate, a silicon wafer, etc., may be provided in contact with the lower surface of the conductive element and/or the upper surface of the conductive layer.

This present invention does not define that the friction layer, the conductive layer and the conductive element must be hard materials, and flexible materials may be selected, since the hardness of the material does not affect the effects of sliding friction and electrical signal output. Furthermore, the nanogenerators made of flexible materials are advantageous in that deformation will occur when a soft, light, and thin friction layer is subjected to the action of a slight external force, and this deformation will result in relative displacement between two friction layers, thereby outputting electrical signals by sliding friction. The use of flexible materials allows the nanogenerator of this invention to have very wide applications even in fields of biology and medicine. During use, a polymer material, which is ultrathin, soft, elastic and/or transparent, may also be used as a substrate for packaging to provide convenience for use and to improve strength. Obviously, all structures disclosed in this present invention may be made of corresponding ultra-soft and elastic materials so as to form flexible nanogenerators, and verbose words are omitted herein. However, various designs derived therefrom should be encompassed by the scope of this patent.

This present invention does not define that the conductive element, the friction layer and the conductive layer must be planar structures, since curved structures may also achieve the relative sliding friction. However, both of the friction layer and the conductive element should be planar or curved structures at the same time to ensure close contact of both of them. In this case, it is absolutely possible that the conductive element and the friction layer are set as curved structures while the conductive layer is set as a planar or curved structure; and of course, a contrary setting may be used, that is, the conductive layer is set as a curved structure while the conductive element and the friction layer are set as a curved or planar design.

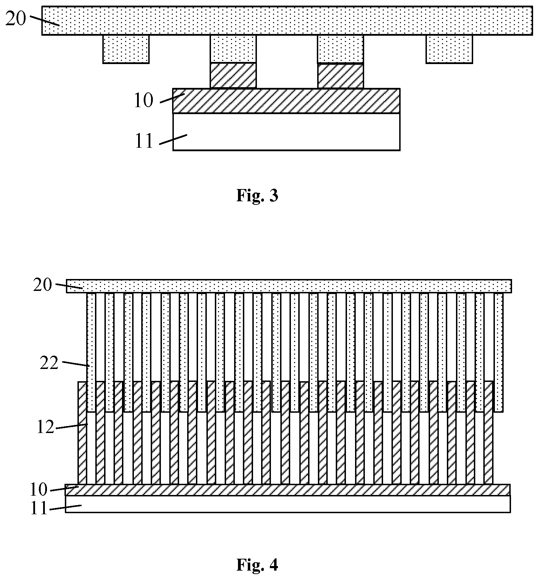

Fig. 3 is a typical embodiment in which the friction layer and the conductive layer of this present invention are not in complete contact. The main portion of this embodiment is the same as that of the embodiment shown in Fig. 1, and only differences between them are described herein. The upper surface of the friction layer 10 of the embodiment shown in Fig. 3 is relatively small, and its upper surface and the lower surface of the conductive layer 20 are all produced into uneven surfaces. Change of the contact area may be generated in the process of relative sliding after they are in contact so that the object of outputting electrical signals is achieved. This embodiment may be used in the case where the magnitude of the external force or the movable space of the friction layer is not sufficient to allow the nanogenerator to output suitable electrical signals since the upper surface of the friction layer 10 is excessively small or the variable of the relative position between the friction layer 10 and the conductive layer 20 is relatively small. By providing an uneven surface, the contact area of the friction layer 10 and the conductive layer 20 and the effective relative displacement required for generating electrical signals are effectively controlled. The person skilled in the art can predict that this manner may be absolutely used to achieve the object of this present invention even when the surface area of the conductive layer 20 is relatively small and the provision of an uneven pattern on the surface may also be selected according to practical situations, and therefore such variations are all within the scope of this invention.

Fig. 4 is a typical embodiment in which the friction layer of this present invention is provided with micro structures. The main portion of this embodiment is the same as that of the embodiment shown in Fig. 1, and only differences between them are described herein. Linear structures on the order of micrometers 12 and 22 are respectively provided on the upper surface of the friction layer 10 and the lower surface of the conductive layer 20 in the embodiment shown in Fig. 4. In the process where the friction layer 10 and the conductive layer 20 are in contact, the microstructures on the surfaces thereof are interspersed and overlapped with each other, and the area of contact friction is greatly increased, so that the output property of the nanogenerator may be effectively improved. As for the specific forms of the microstructures, the person skilled in the art may select the conventional rod-like, linear, flower-shaped, etc., according to the production conditions or practical needs. Although providing microstructures on both surfaces of the friction layer 10 and the conductive layer 20 has the best effect, it is obvious that providing microstructures on either surface of the friction layer 10 and the conductive layer 20 may also obtain a similar effect.

This present invention further provides a power generation method, particularly performing power generation using the sliding triboelectric nanogenerator described above, mainly comprising the steps of:
(1) First, a material is selected according to the aforementioned fundamental and is produced into a friction layer having suitable size and shape.
(2) On the lower surface of the friction layer 10, a conductive element 11 disposed in contact therewith is formed. Fixed disposition is preferred. For example, the conductive element 11 is directly fixed on the lower surface of the friction layer 10 by a method of deposition.
(3) A suitable material is selected according to the aforementioned fundamental and is produced into a conductive layer having suitable size and shape.
(4) The lower surface of the conductive layer 20 is disposed in contact with the upper surface of the friction layer 10 to enable sliding friction to be formed therebetween. This step is a precondition for the power generation method of this invention to be realized and also is a key point for distinguishing from the power generation by a contact-separate-type nanogenerator. In the working process of a contact-separate-type nanogenerator, a space with a variable pitch must exist between two thin film layers, and electrical signals are generated only if a contact-separate circulating action can be achieved. However, no space is required to be formed between the conductive layer 20 and the friction layer 10 in the power generation method of this invention, and the conductive layer 20 and the friction layer 10 are always in contact condition in the process of generating electrical signals. Preferably in the original state, the upper surface of the friction layer 10 and the lower surface of the conductive layer 20 have the same shape and size and are in complete contact to allow the friction area to be maximal. Meanwhile, in the process of subsequent power generation, the friction area may be changed as long as an external force is applied, and thereby electrical signals are generated and output outwards.
(5) The conductive element 11 and the conductive layer 20 are electrically connected to an external circuit. This step is a required condition for electrical energy generated by the nanogenerator to be output outwards. There are a lot of manners to achieve electrical connection, and for example, conductive wire connection is the most conventional manner. Thin layer connection may also be used, and particularly, selection may be made according to practical requirements.
(6) An external force is applied to the nanogenerator to form relative sliding between the friction layer 10 and the conductive layer 20 and to generate relative sliding friction tangent to the contact face, while the distance of relative sliding in the process of sliding is required to be controlled so that dislocation between the friction layer 10 and the conductive layer 20 occurs in the direction along the contact face and the area of sliding friction changes. This step is the most critical one in the power generation method of this invention. It is necessary that there are both relative sliding friction and change of friction area between the friction layer 10 and the conductive layer 20. Only in this way, electrical signals can be output to an external circuit. It is preferable that the lower surface of the conductive layer 20 and the upper surface of the friction layer 10 can slide freely in the direction along the contact face without restriction to improve the response sensitivity to the external force. The power generation method of this invention preferably employs a sustained external force whose direction is periodically inversed or whose magnitude is periodically changed. In this way, alternating pulse electrical signals may be continuously output to an external circuit.

As for the sustained external force whose direction is periodically inversed, its periodicity may be matched with the change of the area of relative sliding friction. The time during which the area of relative sliding friction changes from the maximum to the minimum or from the minimum to the maximum is defined as a period. In this way, it is ensured that pulse electrical signals are always being generated in the process of applying the external force, preventing the case where there is neither contact nor friction between the friction layer 10 and the conductive layer 20 caused by unchanged direction of the external force.

As for the sustained external force whose magnitude is periodically changed, it is preferably suitable for the case where the friction layer 10 and the conductive layer 20 can return to the original positions automatically after the external force is removed. For example, in the original state, the upper surface of the friction layer 10 is in complete contact with the lower surface of the conductive layer 20, and the conductive layer 20 is connected to an insulating spring at one end, the friction layer 10 and the conductive element 11 on its lower surface are kept in fixed positions. Then, an external force is applied to the other end of the conductive layer 20 so that the insulating spring is gradually drawn and the contact friction area between the conductive layer 20 and the friction layer 10 gradually decreases. When the contact friction area decreases to the minimum, the external force is reduced, so that the conductive layer 20 returns to the original position under the action of the insulating spring, and the conductive layer 20 and the friction layer 10 became in complete contact. Such a process is a period, and pulse electrical signals may be continuously transported to an external circuit by repeating this process.

### Example 1

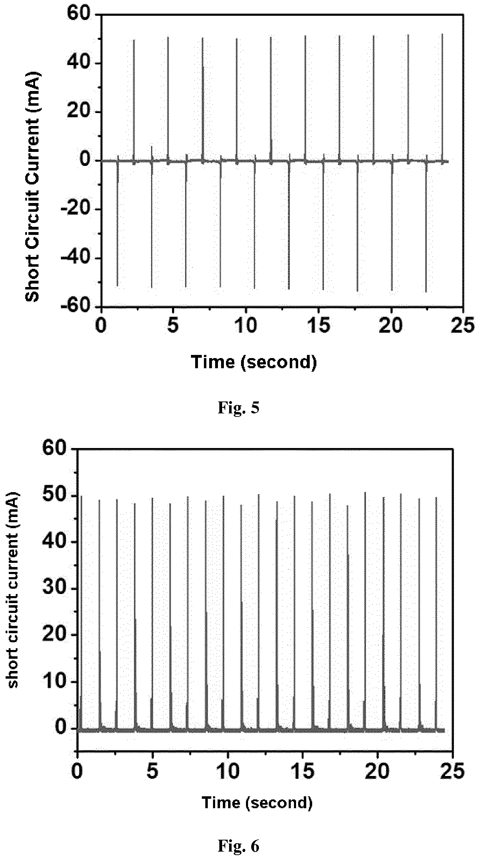

A metal copper thin film layer having a thickness of 100nm was used as the conductive element. A Teflon (polytetrafluoroethylene) thin film having a thickness of 25 micrometers was used as the friction layer. A metal aluminum thin film layer having a thickness of 100nm was used as the conductive layer. The macroscopic sizes of these film layers were 5cm×7cm. The Teflon thin film and the metal aluminum thin film were disposed in contact in a manner of relatively complete overlapping. After a conductive wire was drawn out through the metal aluminum thin film layer and the metal copper thin film layer of the triboelectric nanogenerator described above, the output graph of the short circuit current generated by the triboelectric nanogenerator under the relative sliding having an average rate of 0.6 m/s could be seen in Fig. 5. The output end of the triboelectric nanogenerator was connected to a full-bridge rectifier so that the alternating current output generated by the triboelectric nanogenerator was converted to a direct current output, and the resultant current output could be seen in Fig. 6. It can be seen that the periodic mechanical energy input may be converted to an electrical signal output by the nanogenerator of this invention.

Since polytetrafluoroethylene had an extremely negative polarity in the friction electrode sequence while the metal aluminum had a relatively positive polarity in the electrode sequence, the combination of materials in this Example was favorable to the increase of the output of the triboelectric nanogenerator. However, actually, a friction layer only using insulators may be absolutely allowable.

### Example 2

This Example was the same as Example 1, except that the polytetrafluoroethylene thin film was modified on the basis of Example 1, and verbose words are omitted herein. A nanowire array was produced on the surface of the polytetrafluoroethylene thin film using an inductively coupled plasma etching method. Gold with a thickness of about 10 nanometers was firstly deposited on the surface of polytetrafluoroethylene using a sputtering instrument. The polytetrafluoroethylene thin film was then placed in an inductively coupled plasma etcher to perform etching on the face deposited with gold. Gases of O₂, Ar and CF₄ were introduced, and the flow rates were respectively controlled to be 10sccm, 15sccm and 30sccm, the pressure was controlled at 15mTorr, and the working temperature was controlled at 55°C. A power of 400 watts was used to generate plasma and a power of 100 watts was used to accelerate the plasma. The etching was performed for 5 min to obtain a high-molecular polytetrafluoroethylene nanorod array which was substantially vertical to an insulating thin film layer and had a length of about 1.5 micrometers.

The triboelectric nanogenerator of this invention may use translational kinetic energy to allow the nanogenerator to generate electrical energy and provides power supply for small electrical appliances without supplying power by power supplies such as batteries, etc., and is a nanogenerator convenient for use. Furthermore, the triboelectric nanogenerator of this invention has a simple production method and a low production cost, and is a triboelectric nanogenerator and a nanogenerator set having a wide application range.

## Claims

1. A sliding triboelectric nanogenerator, comprising:
a friction layer (10),
a conductive element (11) disposed in contact with the lower part of the friction layer (10), and
a conductive layer (20);
wherein the upper surface of the friction layer (10) is disposed oppositely to the lower surface of the conductive layer (20); and
the upper surface of the friction layer (10) and the lower surface of the conductive layer (20) perform relative sliding under the action of an external force and generate sliding friction tangent to the contact face between the friction layer (10) and the conductive layer (20) and an electrical signal is output to an external circuit by the conductive element (11) and the conductive layer (20), **characterized in that** the friction area varies in the process of sliding.

2. The nanogenerator as claimed in claim 1, wherein there is a difference in friction electrode sequence between the material consisting the upper surface of the friction layer (10) and the material consisting the lower surface of the conductive layer (20), wherein the friction electrode sequence is the sequence obtained according to the attracting degree of materials for charges, and at the instant when two materials are in friction, negative charges on a friction face transfer from the surface of a material having relatively positive polarity in the friction electrode sequence to the surface of a material having a relatively negative polarity in the friction electrode sequence.

3. The nanogenerator as claimed in claim 1 or 2, wherein the upper surface of the friction layer (10) is disposed in contact with the lower surface of the conductive layer (20).

4. The nanogenerator as claimed in claim 1 or 2, wherein without the action of the external force, the upper surface of the friction layer (10) is separated from the lower surface of the conductive layer (20), and under the action of the external force, the upper surface of the friction layer is in contact with the lower surface of the conductive layer and relative sliding friction tangent to the contact face occurs.

5. The nanogenerator as claimed in any one of claims 1-4, wherein the friction layer (10) is an insulating material or a semiconductor material.

6. The nanogenerator as claimed in claim 5, wherein the insulating material is selected from polystyrene, polyethylene, polypropylene, polydiphenyl propane carbonate, polyethylene terephthalate, polyimide, polyvinyl chloride, polydimethylsiloxane, polytrifluorochloroethylene, polytetrafluoroethylene and parylenes; the semiconductor material is selected from gallium arsenide, gallium phosphide, cadmium sulfide, zinc sulfide, gallium aluminum arsenide and gallium arsenic phosphide.

7. The nanogenerator as claimed in any one of claims 1-4, wherein the friction layer (10) is a non-conductive oxide, a semiconductor oxide or a complex oxide, including silicon oxide, aluminum oxide, manganese oxide, chromium oxide, ferric oxide, titanium oxide, copper oxide, zinc oxide, BiO₂ and Y₂O₃.

8. The nanogenerator as claimed in any one of claims 1-7, wherein microstructures on the order of micrometer or sub-micrometer are distributed on the upper surface of the friction layer (10) and/or the lower surface of the conductive layer (20).

9. The nanogenerator as claimed in any one of claims 1-8, wherein the upper surface of the friction layer (10) and/or the lower surface of the conductive layer (20) are provided with an ornament or a coating of a nanomaterial.

10. The nanogenerator as claimed in any one of claims 1-9, wherein the upper surface of the friction layer (10) and/or the lower surface of the conductive layer (20) have been subjected to chemical modification such that a functional group prone to gain an electron is introduced to the material of the upper surface of the friction layer (10) and/or a functional group prone to lose an electron is introduced to the material of the lower surface of the conductive layer (20); or,
wherein the upper surface of the friction layer (10) and/or the lower surface of the conductive layer (20) have been subjected to chemical modification such that negative charges are introduced into the material of the upper surface of the friction layer (10) and/or positive charges are introduced into the material of the lower surface of the conductive layer (20).

11. The nanogenerator as claimed in any one of claims 1-10, wherein the conductive element (11), the friction layer (10) and/or the conductive layer (20) is/are in a form of a thin film.

12. The nanogenerator as claimed in any one of claims 1-11, wherein the friction layer (10), the conductive layer (20) and/or the conductive element (11) is/are flexible.

13. The nanogenerator as claimed in any one of claims 1-12, wherein the conductive element (11), the friction layer (10) and the conductive layer (20) are all planar structures.

14. The nanogenerator as claimed in any one of claims 1-12, wherein the conductive element (11) and the friction layer (10) are curved structures and/or the conductive layer (20) is a curved structure.

15. A power generation method using the nanogenerator of any one of claims 1-14, comprising the steps of:
(1) providing the friction layer (10),
(2) forming the conductive element (11) disposed in contact with the lower part of the friction layer (10),
(3) providing the conductive layer (20),
(4) bringing the upper surface of the friction layer (10) into contact with the lower surface of the conductive layer (20),
(5) electrically connecting the conductive element (11) and the conductive layer (20) to an external circuit;
(6) applying an external force to perform relative sliding between the friction layer (10) and the conductive layer (20) and to generate relative sliding friction tangent to the contact face between the friction layer (10) and the conductive layer (20), wherein by controlling the distance of relative sliding in the process of sliding, the friction layer (10) and the conductive layer (20) are subjected to dislocation in the direction along the contact face and the area of sliding friction varies; and
(7) outputting an electrical signal to the external circuit by the conductive element (11) and the conductive layer (20).

## Patentansprüche

1. Gleitender triboelektrischer Nanogenerator, umfassend:
eine Reibungsschicht (10),
ein leitendes Element (11), das in Kontakt mit dem unteren Teil der Reibungsschicht (10) angeordnet ist, und
eine leitende Schicht (20);
wobei die Oberseite der Reibungsschicht (10) gegenüber der Unterseite der leitenden Schicht (20) angeordnet ist; und
die Oberseite der Reibungsschicht (10) und die Unterseite der leitenden Schicht (20) relatives Gleiten unter Einwirkung einer externen Kraft ausüben und Gleitreibung tangential zu der Kontaktfläche zwischen der Reibungsschicht (10) und der leitenden Schicht (20) erzeugen und ein elektrisches Signal von dem leitenden Element (11) und der leitenden Schicht (20) an eine externe Schaltung ausgegeben wird, **dadurch gekennzeichnet, dass** die Reibungsfläche in dem Gleitprozess variiert.

2. Nanogenerator nach Anspruch 1, wobei ein Unterschied in der Reibungselektrodensequenz zwischen dem Material, das die Oberseite der Reibungsschicht (10) bildet, und dem Material, das die Unterseite der leitenden Schicht (20) bildet, besteht, wobei die Reibungselektrodensequenz die Sequenz ist, die entsprechend dem Anziehungsgrad der Materialien für Ladungen erhalten wird, und in dem Moment, in dem zwei Materialien in Reibung sind, negative Ladungen an einer Reibungsfläche von der Oberseite eines Materials mit einer relativ positiven Polarität in der Reibungselektrodensequenz zu der Oberseite eines Materials mit einer relativ negativen Polarität in der Reibungselektrodensequenz übergehen.

3. Nanogenerator nach Anspruch 1 oder 2, wobei die Oberseite der Reibungsschicht (10) in Kontakt mit der Unterseite der leitenden Schicht (20) angeordnet ist.

4. Nanogenerator nach Anspruch 1 oder 2, wobei ohne die Einwirkung der externen Kraft die Oberseite der Reibungsschicht (10) von der Unterseite der leitenden Schicht (20) getrennt ist und unter Einwirkung der externen Kraft die Oberseite der Reibungsschicht mit der Unterseite der leitenden Schicht in Kontakt ist und relative Gleitreibung tangential zu der Kontaktfläche auftritt.

5. Nanogenerator nach einem der Ansprüche 1-4, wobei die Reibungsschicht (10) ein Isoliermaterial oder ein Halbleitermaterial ist.

6. Nanogenerator nach Anspruch 5, wobei das Isoliermaterial aus Polystyren, Polyethylen, Polypropylen, Polydiphenylpropancarbonat, Polyethylenterephthalat, Polyimid, Polyvinylchlorid, Polydimethylsiloxan, Polytrifluorchlorethylen, Polytetrafluorethylen und Parylenen ausgewählt ist; das Halbleitermaterial aus Galliumarsenid, Galliumphosphid, Cadmiumsulfid, Zinksulfid, Galliumaluminiumarsenid und Galliumarsenphosphid ausgewählt ist.

7. Nanogenerator nach einem der Ansprüche 1-4, wobei die Reibungsschicht (10) ein nichtleitendes Oxid, ein Halbleiteroxid oder ein komplexes Oxid ist, das Siliziumoxid, Aluminiumoxid, Manganoxid, Chromoxid, Eisenoxid, Titanoxid, Kupferoxid, Zinkoxid, BiO₂ and Y₂O₃ umfasst.

8. Nanogenerator nach einem der Ansprüche 1-7, wobei Mikrostrukturen in der Größenordnung von Mikrometern oder Submikrometern auf der Oberseite der Reibungsschicht (10) und/oder der Unterseite der leitenden Schicht (20) verteilt sind.

9. Nanogenerator nach einem der Ansprüche 1-8, wobei die Oberseite der Reibungsschicht (10) und/oder die Unterseite der leitenden Schicht (20) mit einer Verzierung oder einer Beschichtung aus einem Nanomaterial versehen sind.

10. Nanogenerator nach einem der Ansprüche 1-9, wobei die Oberseite der Reibungsschicht (10) und/oder die Unterseite der leitenden Schicht (20) einer chemischen Modifikation unterzogen wurden, sodass eine funktionelle Gruppe, die dafür anfällig ist, ein Elektron zu gewinnen, in das Material der Oberseite der Reibungsschicht (10) eingeführt wird und/oder eine funktionelle Gruppe, die dafür anfällig ist, ein Elektron zu verlieren, in das Material der Unterseite der leitenden Schicht (20) eingeführt wird; oder
wobei die Oberseite der Reibungsschicht (10) und/oder die Unterseite der leitenden Schicht (20) einer chemischen Modifikation unterzogen wurden, sodass negative Ladungen in das Material der Oberseite der Reibungsschicht (10) eingeführt werden und/oder positive Ladungen in das Material der Unterseite der leitenden Schicht (20) eingeführt werden.

11. Nanogenerator nach einem der Ansprüche 1-10, wobei das leitende Element (11), die Reibungsschicht (10) und/oder die leitende Schicht (20) in Form eines dünnen Films vorliegt/vorliegen.

12. Nanogenerator nach einem der Ansprüche 1-11, wobei die Reibungsschicht (10), die leitende Schicht (20) und/oder das leitende Element (11) flexibel ist/sind.

13. Nanogenerator nach einem der Ansprüche 1-12, wobei das leitende Element (11), die Reibungsschicht (10) und die leitende Schicht (20) alles flächige Strukturen sind.

14. Nanogenerator nach einem der Ansprüche 1-12, wobei das leitende Element (11) und die Reibungsschicht (10) gekrümmte Strukturen sind und/oder die leitende Schicht (20) eine gekrümmte Struktur ist.

15. Stromerzeugungsverfahren mithilfe des Nanogenerators nach einem der Ansprüche 1-14, umfassend die folgenden Schritte:
(1) Bereitstellen der Reibungsschicht (10),
(2) Bilden des leitenden Elements (11), das in Kontakt mit dem unteren Teil der Reibungsschicht (10) angeordnet ist,
(3) Bereitstellen der leitenden Schicht (20),
(4) Inkontaktbringen der Oberseite der Reibungsschicht (10) mit der Unterseite der leitenden Schicht (20),
(5) elektrisches Verbinden des leitenden Elements (11) und der leitenden Schicht (20) mit einer externen Schaltung;
(6) Aufbringen einer externen Kraft, um relatives Gleiten zwischen der Reibungsschicht (10) und der leitenden Schicht (20) auszuüben und um relative Gleitreibung tangential zu der Kontaktfläche zwischen der Reibungsschicht (10) und der leitenden Schicht (20) zu erzeugen, wobei durch Steuern des Abstands des relativen Gleitens in dem Gleitprozess die Reibungsschicht (10) und die leitende Schicht (20) einer Verlagerung in die Richtung entlang der Kontaktfläche unterzogen wurden und die Fläche der Gleitreibung variiert; und
(7) Ausgeben eines elektrischen Signals an die externe Schaltung durch das leitende Element (11) und die leitende Schicht (20).

## Revendications

1. Nanogénérateur triboélectrique à glissement, comprenant :
une couche de frottement (10),
un élément conducteur (11) disposé en contact avec la partie inférieure de la couche de frottement (10), et
une couche conductrice (20) ;
dans lequel la surface supérieure de la couche de frottement (10) est disposée en face de la surface inférieure de la couche conductrice (20) ; et
la surface supérieure de la couche de frottement (10) et la surface inférieure de la couche conductrice (20) effectuent un glissement relatif sous l'action d'une force externe et génèrent une tangente de frottement de glissement à la face de contact entre la couche de frottement (10) et la couche conductrice (20) et un signal électrique est délivré à un circuit externe par l'élément conducteur (11) et la couche conductrice (20),
**caractérisé en ce que** la zone de frottement varie dans le processus de glissement.

2. Nanogénérateur selon la revendication 1, dans lequel il y a une différence de séquence d'électrodes de frottement entre le matériau constituant la surface supérieure de la couche de frottement (10) et le matériau constituant la surface inférieure de la couche conductrice (20), dans lequel la séquence d'électrodes de frottement est la séquence obtenue en fonction du degré d'attraction de matériaux pour des charges, et à l'instant où deux matériaux sont en frottement, des charges négatives sur une face de frottement passent de la surface d'un matériau ayant une polarité relativement positive dans la séquence d'électrodes de frottement à la surface d'un matériau ayant une polarité relativement négative dans la séquence d'électrodes de frottement.

3. Nanogénérateur selon la revendication 1 ou 2, dans lequel la surface supérieure de la couche de frottement (10) est disposée en contact avec la surface inférieure de la couche conductrice (20).

4. Nanogénérateur selon la revendication 1 ou 2 dans lequel, sans l'action de la force externe, la surface supérieure de la couche de frottement (10) est séparée de la surface inférieure de la couche conductrice (20), et sous l'action de la force externe, la surface supérieure de la couche de frottement est en contact avec la surface inférieure de la couche conductrice et une tangente de frottement de glissement relatif apparaît à la face de contact.

5. Nanogénérateur selon l'une quelconque des revendications 1 à 4, dans lequel la couche de frottement (10) est un matériau isolant ou un matériau semi-conducteur.

6. Nanogénérateur selon la revendication 5, dans lequel le matériau isolant est choisi parmi le polystyrène, le polyéthylène, le polypropylène, le carbonate de polydiphénylpropane, le téréphtalate de polyéthylène, le polyimide, le polychlorure de vinyle, le polydiméthylsiloxane, le polytrifluorochloroéthylène, le polytétrafluoroéthylène et les parylènes ; le matériau semi-conducteur est choisi parmi l'arséniure de gallium, le phosphure de gallium, le sulfure de cadmium, le sulfure de zinc, l'arséniure de gallium et d'aluminium et le phosphure de gallium et d'arsenic.

7. Nanogénérateur selon l'une quelconque des revendications 1 à 4, dans lequel la couche de frottement (10) est un oxyde non conducteur, un oxyde semi-conducteur ou un oxyde complexe, comportant l'oxyde de silicium, l'oxyde d'aluminium, l'oxyde de manganèse, l'oxyde de chrome, l'oxyde ferrique, l'oxyde de titane, l'oxyde de cuivre, l'oxyde de zinc, BiO₂ et Y₂O₃.

8. Nanogénérateur selon l'une quelconque des revendications 1 à 7, dans lequel des microstructures de l'ordre du micromètre ou submicrométriques sont réparties sur la surface supérieure de la couche de frottement (10) et/ou la surface inférieure de la couche conductrice (20).

9. Nanogénérateur selon l'une quelconque des revendications 1 à 8, dans lequel la surface supérieure de la couche de frottement (10) et/ou la surface inférieure de la couche conductrice (20) sont pourvues d'un ornement ou d'un revêtement d'un nanomatériau.

10. Nanogénérateur selon l'une quelconque des revendications 1 à 9, dans lequel la surface supérieure de la couche de frottement (10) et/ou la surface inférieure de la couche conductrice (20) ont été soumises à une modification chimique telle qu'un groupe fonctionnel enclin à gagner un électron est introduit dans le matériau de la surface supérieure de la couche de frottement (10) et/ou un groupe fonctionnel enclin à perdre un électron est introduit dans le matériau de la surface inférieure de la couche conductrice (20) ; ou
dans lequel la surface supérieure de la couche de frottement (10) et/ou la surface inférieure de la couche conductrice (20) ont été soumises à une modification chimique telle que des charges négatives sont introduites dans le matériau de la surface supérieure de la couche de frottement (10) et/ou des charges positives sont introduites dans le matériau de la surface inférieure de la couche conductrice (20).

11. Nanogénérateur selon l'une quelconque des revendications 1 à 10, dans lequel l'élément conducteur (11), la couche de frottement (10) et/ou la couche conductrice (20) est/sont sous la forme d'un film mince.

12. Nanogénérateur selon l'une quelconque des revendications 1 à 11, dans lequel la couche de frottement (10), la couche conductrice (20) et/ou l'élément conducteur (11) est/sont souples.

13. Nanogénérateur selon l'une quelconque des revendications 1 à 12, dans lequel l'élément conducteur (11), la couche de frottement (10) et la couche conductrice (20) sont tous des structures planes.

14. Nanogénérateur selon l'une quelconque des revendications 1 à 12, dans lequel l'élément conducteur (11) et la couche de frottement (10) sont des structures courbes et/ou la couche conductrice (20) est une structure courbe.

15. Procédé de production d'électricité utilisant le nanogénérateur de l'une quelconque des revendications 1 à 14, comprenant les étapes consistant à :
(1) se procurer la couche de frottement (10),
(2) former l'élément conducteur (11) disposé en contact avec la partie inférieure de la couche de frottement (10),
(3) se procurer la couche conductrice (20),
(4) mettre la surface supérieure de la couche de frottement (10) en contact avec la surface inférieure de la couche conductrice (20),
(5) relier électriquement l'élément conducteur (11) et la couche conductrice (20) à un circuit externe ;
(6) appliquer une force externe pour effectuer un glissement relatif entre la couche de frottement (10) et la couche conductrice (20) et pour générer une tangente de frottement de glissement relatif à la face de contact entre la couche de frottement (10) et la couche conductrice (20), dans lequel en contrôlant la distance de glissement relatif dans le processus de glissement, la couche de frottement (10) et la couche conductrice (20) sont soumises à une dislocation dans la direction le long de la face de contact et la zone de frottement de glissement varie ; et
(7) délivrer un signal électrique au circuit externe par l'élément conducteur (11) et la couche conductrice (20).
